# FASCICULE DE BREVET EUROPEEN

(11) **EP 4 619 272 B1**
(45) Date de publication et mention de la délivrance du brevet: **25.11.2026**
(21) Numéro de dépôt: 23809275.3
(22) Date de dépôt: 12.10.2023
(51) Int. Cl.: B60L 53/18, B60R 16/02, H02G 11/02

(54) **VEHICULE AUTOMOBILE COMPRENANT UN SYSTEME ET UN PROCEDE D'ENROULAGE DE CÂBLE DE RECHARGE EMBARQUE**
KRAFTFAHRZEUG MIT EINEM SYSTEM UND EINEM VERFAHREN ZUM AUFWICKELN EINES BORDEIGENEN LADEKABELS
MOTOR VEHICLE COMPRISING A SYSTEM AND A METHOD FOR WINDING AN ON-BOARD CHARGING CABLE

(30) Priorité: 18.11.2022 FR 2211993
(43) Date de publication de la demande: 24.09.2025
(73) Titulaire: Stellantis Auto SAS, 78300 Poissy (FR)
(72) Inventeur: STEVENS, Olivier, 78760 JOUARS PONTCHARTRAIN (FR); TIXIER, Julien, 78460 CHEVREUSE (FR); COHEN, Philippe, 91390 MORSANG SUR ORGE (FR)
(74) Mandataire: PSIP
(86) Numéro de dépôt international: PCT/FR2023/051593
(87) Numéro de publication internationale: WO 2024/105317

(56) Documents cités:
- WO-A1-2016/020512
- DE-A1- 102021 200 796
- US-A- 4 904 205
- US-A- 5 855 262

## Description

La présente invention revendique la priorité de la demande française N°2211993 déposée le 18.11.2022.

L'invention se rapporte au domaine des véhicules électriques, et plus précisément les systèmes de recharge à câble de ces véhicules.

Le document WO 2016/020512 divulgue un véhicule automobile défini dans un repère de l'espace comprenant un axe avant-arrière suivant une direction de déplacement du véhicule automobile, un axe latéral perpendiculaire à l'axe avant-arrière, et un axe vertical perpendiculaire à l'axe avant-arrière et à l'axe latéral, le véhicule automobile comprenant : une batterie de traction ; un câble de recharge embarqué comprenant une extrémité connectée électriquement à la batterie de traction, et une extrémité comprenant un connecteur de charge configuré pour être connecté à une station de recharge ; un système antichoc comprenant deux absorbeurs montés chacun autour d'un axe d'absorbeur. Le véhicule comprend en outre un enrouleur monté autour d'un axe, le câble de recharge étant enroulable ou déroulable sur l'enrouleur, ainsi qu'un moyen de rappel actionnant l'enrouleur dans le sens de l'enroulement du câble de recharge.

Dans ce domaine, pour le branchement d'un véhicule électrique à une borne de recharge, un câble de rallonge est connecté à une interface sur le véhicule et sur la borne de recharge. Après utilisation, le câble est rangé dans le coffre du véhicule.

Malheureusement, le câble prend de la place dans le coffre, et n'est pas pratique à manipuler. Par ailleurs, le câble est souvent emmêlé ce qui le rend encore moins pratique ; et sale car il traine par terre en utilisation.

L'objectif de l'invention est de remédier aux défauts de l'art antérieur, et notamment de proposer une solution de câble de recharge pratique à utiliser, facile à ranger sans diminuer la contenance du coffre, et étant moins sujet aux salissures.

Pour atteindre cet objectif, l'invention propose un véhicule automobile dans un repère dans l'espace comprenant un axe avant-arrière suivant une direction de déplacement du véhicule automobile, un axe latéral perpendiculaire à l'axe avant-arrière, et un axe vertical perpendiculaire à l'axe avant-arrière et à l'axe latéral, le véhicule automobile comprenant :
- une batterie de traction ;
- un câble de recharge embarqué comprenant une extrémité connectée électriquement à la batterie de traction, et une extrémité comprenant un connecteur de charge configuré pour être connecté à une station de recharge ;
- un système antichoc comprenant deux absorbeurs montés chacun autour d'un axe d'absorbeur ;
Il comprend en outre :
- un enrouleur monté sur l'un des absorbeurs autour de son axe d'absorbeur, le câble de recharge étant enroulable ou déroulable sur l'enrouleur ; et
- un moyen de rappel actionnant l'enrouleur dans le sens d'un enroulement du câble de recharge.

Avantageusement, l'implantation d'un système d'enrouleur autour de l'absorbeur de la poutre pare-chocs avec un système de rappel d'enroulement permet à l'utilisateur du véhicule d'avoir un branchement à la borne plus pratique, rapide et propre.

En outre, l'invention permet d'avoir une manipulation simplifiée pour l'utilisateur et un gain de place dans le coffre. De plus, il n'y a plus besoin d'un câble rallonge.

Selon une variante, le moyen de rappel comprend un ressort ayant une extrémité fixée à l'enrouleur, et l'autre extrémité fixée au deuxième absorbeur de choc, de sorte que le moyen de rappel actionne l'enrouleur dans le sens d'un enroulement du câble de recharge. Cela permet de faciliter le rangement du câble par un enroulage automatique.

Selon une variante, le véhicule automobile comprend une carrosserie, et une trappe de connecteur dans la carrosserie, configurée pour donner accès au connecteur. Cela permet de faciliter l'accès au connecteur pour dérouler le câble.

Selon une variante, la trappe de connecteur comprend une butée limitant l'enroulement du câble de recharge. Cela permet de maintenir au moins une partie du connecteur dans la trappe.

Selon une variante, les axes d'absorbeur sont parallèles à l'axe avant-arrière. Cela permet d'enrouler autour d'un axe orienté vers l'avant, et d'occuper de l'espace vers le dessus, le dessous et latéralement à l'absorbeur, au niveau du pare-chocs.

Selon une variante, le véhicule automobile comprend un pare-chocs avant et un pare-chocs arrière en référence à l'axe avant-arrière, et l'enrouleur est disposé sur un absorbeur du pare-chocs arrière en référence à l'axe avant-arrière. Cela permet d'occuper un espace disponible au niveau du pare-chocs arrière.

Selon une variante, l'absorbeur portant l'enrouleur, est cylindrique. Cela permet de faciliter l'emboitement de l'enrouleur sur l'absorbeur.

Selon une variante, le moyen de rappel comprend un cordon configuré pour s'enrouler sur l'enrouleur pendant que le câble de recharge est déroulé, de sorte que le moyen de rappel actionne l'enrouleur dans le sens d'un enroulement du câble de recharge. Cela permet de renforcer l'effort de rappel par l'enroulage du cordon.

Selon une variante, l'enrouleur comprend un premier compartiment pour l'enroulage du câble, et un deuxième compartiment séparé pour l'enroulage du cordon. Cela permet de ne pas emmêler le cordon et le câble de recharge.

L'invention porte en outre sur un procédé de charge de véhicule pour un véhicule automobile selon l'invention, caractérisé en ce qu'il comprend les étapes suivantes :
- accéder au connecteur,
- dérouler le câble de recharge en contrecarrant le moyen de rappel ;
- brancher le connecteur à une station de recharge ;
- débrancher le connecteur de la station de recharge ;
- enrouler le câble de recharge au moyen de l'enrouleur.

L'invention sera davantage détaillée par la description non limitative de variantes, et sur la base des figures annexées, dans lesquelles :
- [FIG. 1] illustre schématiquement une vue dans l'espace d'une caisse d'un véhicule selon un mode de réalisation préféré de l'invention, équipé d'une poutre pare-chocs ;
- [FIG. 2] illustre schématiquement une vue similaire à celle de la figure 1, mais sans ladite poutre pare-chocs ;
- [FIG. 3] illustre schématiquement une vue arrière de la caisse de la figure 2, où le connecteur est tiré pour dérouler le câble ; et
- [FIG. 4] illustre schématiquement une vue similaire à celle de la figure 3, où le connecteur est relâché pour enrouler le câble.

L'invention concerne un véhicule automobile électrique qui comprend une batterie de traction, et un câble de recharge C embarqué connecté à la batterie de traction. Par simplification, les figures n'illustrent pas la carrosserie du véhicule, mais la caisse H.

Le véhicule automobile est décrit dans un repère dans l'espace comprenant un axe avant-arrière X suivant une direction de déplacement du véhicule automobile, un axe latéral Y perpendiculaire à l'axe avant-arrière X, et un axe vertical Z perpendiculaire à l'axe avant-arrière X et à l'axe latéral Y.

Le câble C embarqué comprend un connecteur F, tel qu'une fiche électrique, à connecter à une station de recharge pour recharger le véhicule.

Selon l'invention, le véhicule automobile électrique comprend en outre un enrouleur E placé autour de l'absorbeur A1 de la poutre pare-chocs PC.

Le câble de rechargement C est enroulé sur l'enrouleur E.

De plus, le véhicule automobile électrique comprend en outre un ressort de rappel R fixé, à une extrémité, sur le deuxième absorbeur A2 opposé au premier absorbeur A1, et sur l'enrouleur E à l'autre extrémité.

Lorsque le câble de rechargement C est déroulé, le ressort R s'enroule concomitamment autour de l'enrouleur de câble E, et génère un effort de rappel qui permettra de rembobiner le câble C après l'avoir débranché de la borne.

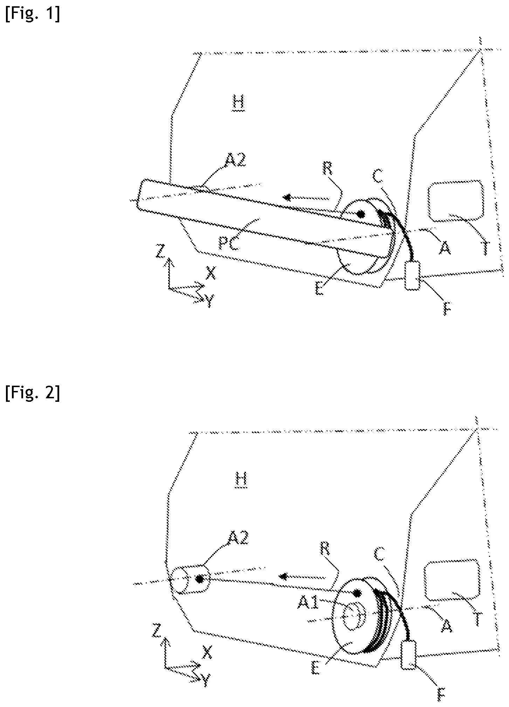

De préférence, l'absorbeur A1 déborde à l'arrière de l'enrouleur E de sorte à former un compartiment séparé pour l'enroulage du ressort R. La figure 2 illustre ces deux compartiments.

Le câble de rechargement C est accessible via une trappe T placée sur la carrosserie du véhicule, par exemple au niveau du pare-chocs.

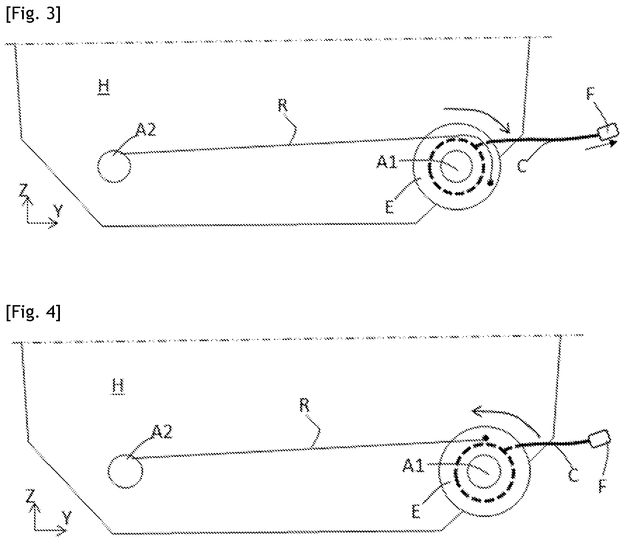

En utilisation, l'utilisateur accède à la trappe T, par exemple en ouvrant un couvercle (non représenté). Il peut ensuite saisir le connecteur F et le tirer comme illustré en figure 3, pour brancher la fiche F sur une prise de la borne de recharge.

En déroulant le câble C, le cordon du ressort R s'enroule sur l'enrouleur E.

En fin de recharge, l'utilisateur débranche la fiche F de la prise, et laisse le câble C s'enrouler sous l'effet du ressort R comme illustré en figure 4.

En enroulant le câble C, le cordon du ressort R se déroule en appliquant un effort de rappel.

## Revendications

1. Véhicule automobile dans un repère dans l'espace comprenant un axe avant-arrière (X) suivant une direction de déplacement du véhicule automobile, un axe latéral (Y) perpendiculaire à l'axe avant-arrière (X), et un axe vertical (Z) perpendiculaire à l'axe avant-arrière (X) et à l'axe latéral (Y), le véhicule automobile comprenant :
- une batterie de traction ;
- un câble de recharge (C) embarqué comprenant une extrémité connectée électriquement à la batterie de traction, et une extrémité comprenant un connecteur de charge (F) configuré pour être connecté à une station de recharge ;
- un système antichoc comprenant deux absorbeurs (A1, A2) montés chacun autour d'un axe d'absorbeur (A) ;
Il comprend en outre :
- un enrouleur (E) monté sur l'un des absorbeurs (A1) autour de son axe d'absorbeur (A), le câble de recharge (C) étant enroulable ou déroulable sur l'enrouleur (E) ; et
- un moyen de rappel (R) actionnant l'enrouleur (E) dans le sens d'un enroulement du câble de recharge (C).

2. Véhicule automobile selon la revendication 1, **caractérisé en ce que** le moyen de rappel comprend un ressort (R) ayant une extrémité fixée à l'enrouleur (E), et l'autre extrémité fixée au deuxième absorbeur de choc (A2), de sorte que le moyen de rappel actionne l'enrouleur (E) dans le sens d'un enroulement du câble de recharge (C).

3. Véhicule automobile selon l'une quelconque des revendications 1 à 2, comprenant une carrosserie (H), **caractérisé en ce qu'**il comprend en outre une trappe de connecteur (T) dans la carrosserie (H), configurée pour donner accès au connecteur (F).

4. Véhicule automobile selon la revendication 3, **caractérisé en ce que** la trappe de connecteur (T) comprend une butée limitant l'enroulement du câble de recharge (C).

5. Véhicule automobile selon l'une quelconque des revendications 1 à 4, **caractérisé en ce que** les axes d'absorbeur (A) sont parallèles à l'axe avant-arrière (X).

6. Véhicule automobile selon l'une quelconque des revendications 1 à 5, comprenant un pare-chocs avant et un pare-chocs arrière en référence à l'axe avant-arrière (X), **caractérisé en ce que** l'enrouleur (E) est disposé sur un absorbeur (A1) du pare-chocs arrière en référence à l'axe avant-arrière (X).

7. Véhicule automobile selon la revendication 6, **caractérisé en ce que** l'absorbeur (A1) portant l'enrouleur (E), est cylindrique.

8. Véhicule automobile selon l'une quelconque des revendications 1 à 7, **caractérisé en ce que** le moyen de rappel (R) comprend un cordon configuré pour s'enrouler sur l'enrouleur (E) pendant que le câble de recharge (C) est déroulé, de sorte que le moyen de rappel (R) actionne l'enrouleur (E) dans le sens d'un enroulement du câble de recharge (C).

9. Véhicule automobile selon la revendication 8, **caractérisé en ce que** l'enrouleur comprend un premier compartiment pour l'enroulage du câble (C), et un deuxième compartiment séparé pour l'enroulage du cordon (R).

10. Procédé de charge de véhicule pour un véhicule automobile selon l'une quelconque des revendications 1 à 9, **caractérisé en ce qu'**il comprend les étapes suivantes :
- accéder au connecteur (F),
- dérouler le câble de recharge (C) en contrecarrant le moyen de rappel (R) ;
- brancher le connecteur (F) à une station de recharge ;
- débrancher le connecteur (F) de la station de recharge ;
- enrouler le câble de recharge (C) au moyen de l'enrouleur (E).

## Patentansprüche

1. Kraftfahrzeug in einem räumlichen Koordinatensystem, das eine vordere hintere Achse (X) in einer Fahrtrichtung des Kraftfahrzeugs, eine seitliche Achse (Y) senkrecht zur vorderen hinteren Achse (X) und eine vertikale Achse (Z) senkrecht zur vorderen hinteren Achse (X) und zur seitlichen Achse (Y) umfasst, wobei das Kraftfahrzeug umfasst:
- eine Antriebsbatterie;
- ein eingebautes Ladeseil (C), das ein Ende umfasst, das elektrisch mit der Antriebsbatterie verbunden ist, und ein Ende, das einen Ladeanschluss (F) umfasst, der zur Verbindung mit einer Ladestation konfiguriert ist;
- ein Stoßdämpfungssystem, das zwei Absorber umfasst (A1, A2), die jeweils um eine Absorberachse (A) montiert sind;
darüber hinaus umfasst es:
- eine Wickeleinrichtung (E), die auf einem der Absorber (A1) um seine Absorberachse (A) montiert ist, wobei das Ladeseil (C) auf der Wickeleinrichtung (E) auf- oder abwickelbar ist; und
- eine Rückstelleinrichtung (R), die die Wickeleinrichtung (E) in Richtung einer Wicklung des Ladeseils (C) betätigt.

2. Kraftfahrzeug nach Anspruch 1, **dadurch gekennzeichnet, dass** das Rückstellmittel eine Feder (R) umfasst, die ein Ende aufweist, das an der Aufrolleinrichtung (E) befestigt ist, und das andere Ende, das an dem zweiten Stoßdämpfer (A2) befestigt ist, sodass das Rückstellmittel die Aufrolleinrichtung (E) in der Richtung einer Aufrollung des Ladeseils (C) betätigt.

3. Kraftfahrzeug nach einem der Ansprüche 1 bis 2 mit einer Karosserie (H), **dadurch gekennzeichnet, dass** es ferner eine Verbinderklappe (T) in der Karosserie (H) aufweist, die so konfiguriert ist, dass sie Zugang zum Verbinder (F) gewährt.

4. Kraftfahrzeug nach Anspruch 3, **dadurch gekennzeichnet, dass** die Verbinderklappe (T) einen Anschlag aufweist, der die Wicklung des Ladekabels (C) begrenzt.

5. Kraftfahrzeug nach einem der Ansprüche 1 bis 4, **dadurch gekennzeichnet, dass** die Absorberachsen (A) parallel zur vorderen und hinteren Achse (X) verlaufen.

6. Kraftfahrzeug nach einem der Ansprüche 1 bis 5, mit einem vorderen und einem hinteren Stoßfänger in Bezug auf die vordere hintere Achse (X), **dadurch gekennzeichnet, dass** die Aufrolleinrichtung (E) auf einem Absorber (A1) des hinteren Stoßfängers in Bezug auf die vordere hintere Achse (X) angeordnet ist.

7. Kraftfahrzeug nach Anspruch 6, **dadurch gekennzeichnet, dass** der die Aufrolleinrichtung (E) tragende Absorber (A1) zylindrisch ist.

8. Kraftfahrzeug nach einem der Ansprüche 1 bis 7, **dadurch gekennzeichnet, dass** das Rückstellmittel (R) eine Schnur umfasst, die so konfiguriert ist, dass sie sich auf die Aufrolleinrichtung (E) aufwickelt, während das Ladeseil (C) abgewickelt wird, sodass das Rückstellmittel (R) die Aufrolleinrichtung (E) im Sinne einer Aufrollung des Ladeseils (C) betätigt.

9. Kraftfahrzeug nach Anspruch 8, **dadurch gekennzeichnet, dass** die Aufrolleinrichtung eine erste Kammer zum Aufrollen des Kabels (C) und eine zweite separate Kammer zum Aufrollen der Schnur (R) aufweist.

10. Verfahren zum Laden eines Fahrzeugs für ein Kraftfahrzeug nach einem der Ansprüche 1 bis 9, **dadurch gekennzeichnet, dass** es die folgenden Schritte umfasst:
- Zugreifen auf den Steckverbinder (F),
- Abwickeln des Ladekabels (C) unter Gegenbewegung zu den Rückstellmitteln (R),
- Verbinden des Steckverbinders (F) mit einer Ladestation,
- Trennen des Steckverbinders (F) von der Ladestation,
- Aufwickeln des Ladekabels (C) mittels der Aufrolleinrichtung (E).

## Claims

1. Motor vehicle in a spatial coordinate system comprising a front rear axis (X) in a direction of travel of the motor vehicle, a lateral axis (Y) perpendicular to the front rear axis (X) and a vertical axis (Z) perpendicular to the front rear axis (X) and to the lateral axis (Y), the motor vehicle comprising:
- a drive battery;
- a built-in charging cable (C) comprising an end electrically connected to the drive battery and an end comprising a charging terminal (F) configured for connection to a charging station;
- a shock absorbing system comprising two absorbers (A1, A2) each mounted about an absorber axis (A);
it further comprising:
- a winding device (E) mounted on one of the absorbers (A1) about its absorber axis (A) is mounted, wherein the charging cable (C) can be wound or unwound on the winding device (E); and
- a restoring device (R) which actuates the winding device (E) in the direction of a winding of the charging cable (C).

2. Motor vehicle according to claim 1, **characterized in that** the return means comprises a spring (R) having one end fixed to the retractor (E) and the other end fixed to the second shock absorber (A2), so that the return means actuates the retractor (E) in the direction of reeling of the loading cable (C).

3. Motor vehicle according to any one of claims 1 to 2, comprising a body (H), **characterized in that** it further comprises a connector flap (T) in the body (H) configured to provide access to the connector (F).

4. Motor vehicle according to Claim 3, **characterized in that** the connector flap (T) has a stop which limits the winding of the charging cable (C).

5. Motor vehicle according to one of Claims 1 to 4, **characterized in that** the absorber axles (A) run parallel to the front and rear axles (X).

6. Motor vehicle according to one of Claims 1 to 5, comprising a front and a rear bumper with respect to the front rear axle (X), **characterized in that** the retractor (E) is arranged on an absorber (A1) of the rear bumper with respect to the front rear axle (X).

7. Motor vehicle according to Claim 6, **characterized in that** the absorber (A1) carrying the retractor (E) is cylindrical.

8. Motor vehicle according to any one of claims 1 to 7, **characterized in that** the return means (R) comprises a cord which is configured to wind up on the retractor (E) while the loading cable (C) is being unwound, so that the return means (R) actuates the retractor (E) in the sense of winding up the loading cable (C).

9. Motor vehicle according to Claim 8, **characterized in that** the winding device has a first chamber for winding the cable (C) and a second separate chamber for winding the cord (R).

10. Method for loading a vehicle for a motor vehicle according to one of Claims 1 to 9, **characterized in that** it comprises the following steps:
- accessing the plug-in connector (F),
- unwinding the charging cable (C) with counter-movement to the return means (R),
- connecting the plug-in connector (F) to a charging station,
- disconnecting the plug-in connector (F) from the charging station,
- winding up the charging cable (C) by means of the reeling device (E).
